Europäisches Patentamt

European Patent Office

Office européen des brevets

(19)

(11) Numéro de publication: **0 210 921 B1**

(12) **FASCICULE DE BREVET EUROPEEN**

(45) Date de publication de fascicule du brevet:
**12.06.91**

(51) Int. Cl.⁵: **G02B 6/38**, G02B 6/42

(21) Numéro de dépôt: **86401639.9**

(22) Date de dépôt: **22.07.86**

(54) Embase de connexion pour fibre optique et sa mise en oeuvre pour la réalisation d'une connexion d'une fibre optique à un composant optoélectronique ou d'une connexion de deux fibres optiques.

(30) Priorité: **22.07.85 FR 8511170**

(43) Date de publication de la demande:
**04.02.87 Bulletin 87/06**

(45) Mention de la délivrance du brevet:
**12.06.91 Bulletin 91/24**

(84) Etats contractants désignés:
**DE GB IT SE**

(56) Documents cités:
**EP-A- 0 063 085**

**PATENTS ABSTRACTS OF JAPAN, vol. 7, no.
2 (P-166)[1147], 7 juin 1983; & JP-A-57 161 819**

**PATENTS ABSTRACTS OF JAPAN, vol. 3, no.
22, (E-93), 24 février 1979, page 158 E 93; &
JP-A-54 1647**

**PATENTS ABSTRACTS OF JAPAN, vol. 7, no.
260 (P-237)[1405], 18 novembre 1983; & JP-
A-58 143 309**

**PATENTS ABSTRACTS OF JAPAN, vol. 4, no.
107 (P-21)[589], 3 juillet 1980; & JP-A-55 65**

915

(73) Titulaire: **RADIALL INDUSTRIE, Société Anonyme dite:**
**101, rue Philibert Hoffmann Zone Industrielle
Ouest**
**F-93116 Rosny-Sous-Bois(FR)**

(72) Inventeur: **Cartier, Jacques**
**8, avenue Foch**
**F-94120 Fontenay-Sous-Bois(FR)**

(74) Mandataire: **Nony, Michel et al**
**Cabinet NONY & CIE, 29, rue Cambacérès**
**F-75008 Paris(FR)**

## Description

La présente invention est relative à un procédé pour realiser une embase monobloc de connexion pour fibre optique, pour la connexion d'une fibre optique à un composant optoélectronique ou la connexion de deux fibres optiques.

Plus Précisément, la présente invention est relative à un procédé pour réaliser une embase monobloc agencée pour recevoir une fibre optique positionnée et centrée dans un embout présentant une protubérance tubulaire axiale pourvue d'un conduit dans lequel la fibre optique peut être introduite avec jeu et immobilisée de manière que son extrémité coïncide avec l'extrémité de la protubérance et, entourant la partie arrière de celle-ci, un évidement annulaire présentant une paroi de forme conique.

La Société déposante a déjà décrit dans EP-A-0063085 et EP-A-0125942 l'utilisation de tels embouts pour la réalisation de connexions optiques et les différentes phases de leur préparation en vue de positionner et centrer la fibre dans l'embout, notamment par rapport à la paroi de forme conique située en retrait de l'extrémité de la fibre.

Pour la réalisation de connexions optiques, il était prévu dans les documents antérieurs d'utiliser un corps de butée, notamment sphérique, présentant un orifice axial pour recevoir la protubérance axiale de l'embout, le corps de butée définissant une portée de contact avec la paroi conique de l'évidement annulaire de l'embout, de manière telle que, lors de tout mouvement relatif des portées en contact, l'extrémité d'une fibre au niveau de la face d'extrémité de la protubérance d'un embout soit maintenue à une distance constante prédéterminée du centre du corps de butée.

Le corps de butée, sous forme de sphère pour la connexion de deux fibres optiques ou de demi-sphère pour la connection d'une fibre optique à un composant optoélectronique tel qu'une diode électroluminescente, doit présenter une grande précision de dimensionnement, généralement de l'ordre de ± 3 μm.

La réalisation de telles sphères ou demi-sphères de précision est coûteuse.

La Société déposante a maintenant découvert que, de manière surprenante, l'on pouvait réaliser des connexions en utilisant un principe similaire à celui mentionné dans les documents antérieurs cités précédemment, en évitant d'avoir à usiner un corps sphérique de précision et donc en réduisant notablement le coût de fabrication.

A cet effet, selon l'invention, on utilise pour la réception d'un embout tel que défini ci-dessus et comportant une fibre optique, une embase monobloc constituée d'un corps tubulaire présentant à une extrémité un flasque frontal, ledit flasque étant pourvu sur sa face arrière, à l'intérieur de l'alésage du corps tubulaire, d'une saillie présentant, au moins une portée convexe, ledit flasque pourvu de ladite saillie étant muni d'un orifice axial traversant, apte à recevoir la protubérance axiale d'un embout mis en place de l'arrière dans l'alésage du corps d'embase et amené en appui, par sa portée conique, sur la portée convexe de ladite saillie et pour obtenir une position parfaitement précise de l'extrémité de la fibre par rapport au plan frontal de l'embase, c'est-à-dire la face avant de son flasque frontal, on réalise une ébauche d'embase avec une surépaisseur de son flasque frontal, l'on met en place à l'intérieur de ladite embase un calibre de précision reproduisant la forme d'un embout, l'on détecte, notamment par palpage, la position de la protubérance axiale du calibre dans l'orifice axial du flasque de l'embase et l'on usine la face frontale dudit flasque de manière à l'amener à coïncider avec la face frontale de la protubérance du calibre de sorte que la portée conique du calibre esten contact avec la saillie de l'embase selon une ligue circulaire en position prédéterminée par rapport à la face avant dudit flasque de l'embase.

On comprend que, selon l'invention, on reconstitue les conditions de fonctionnement prévues dans les connecteurs antérieurs de la Société déposante, notamment celui décrit dans EP-A-0063085, le contact entre les portées en regard de l'embout et de la saillie de l'embase s'effectuant selon une ligne circulaire de position parfaitement définie par rapport à l'extrémité de la fibre.

Contrairement à la technique antérieure, il n'est pas nécessaire de prévoir des tolérances importantes.

Ainsi, l'embase peut être réalisée par usinage à l'aide d'un outil de forme, sa saillie intérieure pouvant être réalisée avec des tolérances de, environ, ± 0,1 mm.

En variante, l'embase selon l'invention peut être réalisée par moulage avec des tolérances du même ordre.

L'embase, selon la présente invention, peut être réalisée en tout matériau, notamment métallique, approprié tel que par exemple un alliage zinc-aluminium, connu sous la dénomination de "Zamac".

La saillie intérieure de l'embase peut être constituée sous la forme d'une calotte sphérique.

En variante, la saillie peut comporter à partir de la face arrière du flasque frontal, une portée cylindrique raccordée à une portée torique à faible rayon, se raccordant elle-même à une face transversale plane.

Pour realiser une connexion on retire le calibre utilisé pour la realisation de l'embase, comme décrit plus haut, et l'on met en place l'embout contenant la fibre optique que l'on immobilise dans l'embase, notamment par l'intermédiaire d'une bague vissée à la partie arrière de l'embase et exerçant un appui axial, notamment par l'intermédiaire d'un ressort, sur ledit embout.

Lorsque l'on désire réaliser la connexion d'une fibre optique sur un boîtier de composant optoélectronique tel qu'une diode, on fixe alors l'équipage ainsi réalisé sur la face avant du boîtier comportant le composant.

Lorsque l'on désire réaliser la connexion de deux fibres optiques, on réalise deux embases de la manière définie précédemment, on aligne celles-ci à l'aide de deux calibres reproduisant chacun sensiblement la forme d'un embout, l'un des calibres présentant une protubérance axiale notablement allongée et l'autre calibre présentant un alésage axial pour recevoir le prolongement de la protubérance axiale du premier calibre. On immobilise alors les deux embases dans la position alignée ainsi réalisée grâce aux calibres en engagement mutuel, à l'aide de moyens de fixation traversant les flasques frontaux des deux embases en appui l'un sur l'autre.

Après avoir retiré les deux calibres, on met en place les deux embouts contenant chacun une fibre optique que l'on immobilise notamment de la manière indiquée ci-dessus.

Dans le but de mieux faire comprendre l'invention, on va maintenant en décrire des exemples de réalisation nullement limitatifs en se référant au dessin annexé dans lequel :

- La figure 1 illustre la connexion d'une fibre optique et d'une diode électroluminescente utilisant une embase selon un premier mode de réalisation de la présente invention,
- la figure 2 est une vue analogue à la figure 1 mettant en oeuvre une embase selon un second mode de réalisation de l'invention,
- la figure 3 illustre la connexion de deux fibres optiques mettant en oeuvre deux embases selon le premier mode de réalisation de l'invention,
- la figure 4 illustre une phase de préparation à l'aide d'un calibre de l'embase selon le premier mode de réalisation de l'invention,
- la figure 4a illustre le calibre utilisé dans la figure 4 positionné par rapport à une sphère de référence.
- et, la figure 5 illustre la phase d'alignement de deux embases selon l'invention pour la réalisation d'une connexion selon la figure 3.

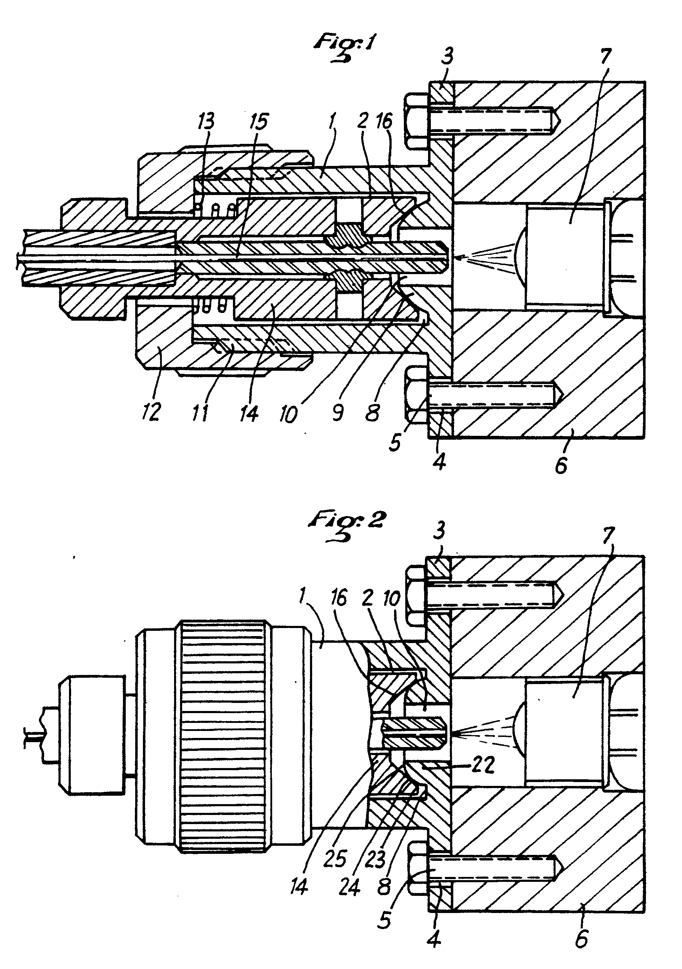

L'embase illustrée sur la figure 1 comporte un corps tubulaire 1 muni d'un alésage 2 et se terminant par un flasque frontal 3 présentant des orifices 4 pour le passage de vis de fixation 5 de l'embase sur la face frontale d'un boîtier 6 comportant un composant octoélectronique tel qu'une diode électroluminescente 7.

La face arrière 8 du flasque comporte a l'intérieur de l'alésage 2 une saillie en forme de calotte sphérique 9, le flasque 3 pourvu de la saillie 9 étant traversé par un orifice axial 10.

Sa partie arrière, le corps tubulaire 1 de l'embase présente un filetage extérieur il pour l'engagement d'une bague vissée 12 destinée à appliquer par l'intermédiaire d'un ressort 13 un embout désigné globalement par 14 et contenant une fibre optique 15 par une portée conique 16 contre la portée sphérique de la saillie 9 intérieure dans l'embase.

La structure d'un tel embout 14 ainsi que les différentes phases de montage de positionnement et d'alignement de la fibre optique a l'intérieur ont déjà été décrites dans EP-A-0125942 auquel on pourra se référer pour de plus amples détails.

L'embase a été réalisée de la façon suivante.

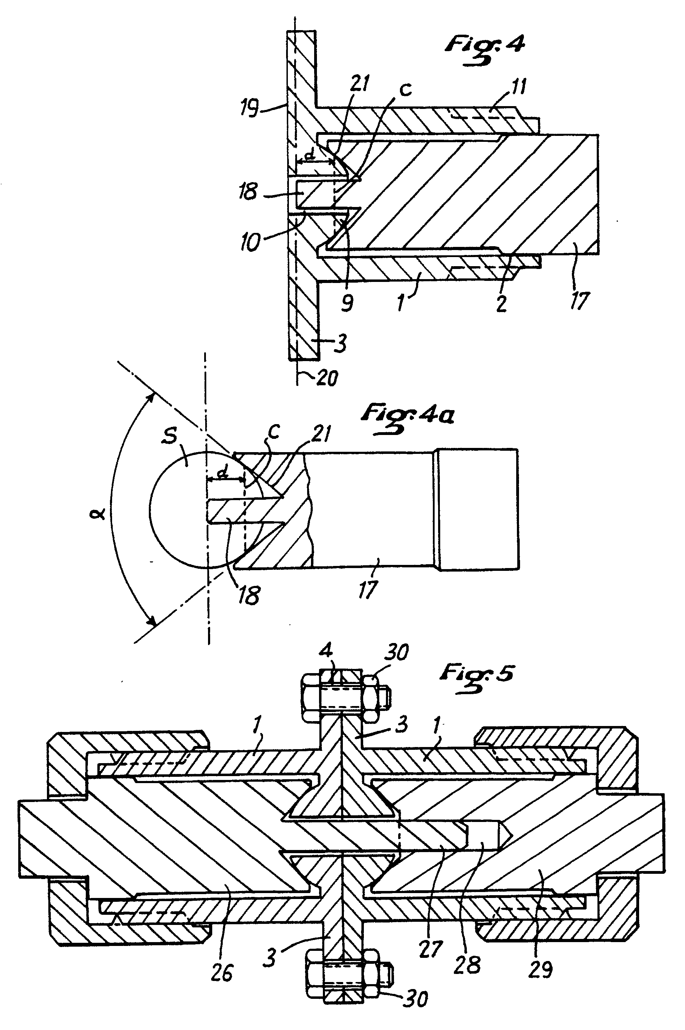

On fabrique d'abord par usinage ou par moulage une ébauche telle qu'illustrée à la figure 4, cette ébauche présentant un flasque frontal 3 muni d'une surépaisseur. La saillie 9 sous forme de calotte sphérique dans l'exemple illustré n'est pas fabriquée avec une grande précision. Une tolérance de $\pm$ 0,05 mm sur le rayon est suffisante dans la pratique.

On introduit à l'intérieur de l'alésage de l'ébauche d'embase un calibre 17 réalisé avec une grande précision, ce calibre présentant une protubérance 18 engagée dans l'orifice axial du flasque 3 et de la saillie 9 de l'embase.

On a au préalable déterminé sur le calibre 17, comme illustré sur la figure 4a une référence mécanique sous la forme d'une ligne circulaire C constituant la ligne de contact entre la portée conique du calibre et une sphère de référence S. Cette ligne de contact C se trouve à une distance prédéterminée $d$ de l'extrémité de la protubérance 18 située dans le plan axial de la sphère, la position de la ligne de contact étant déterminée par le diamètre de la sphère et l'angle de cone $\propto$ qui dans la pratique est avantageusement de 90$^{\circ}$ $\pm$ 0,5$^{\circ}$.

Une fois le calibre 17 engagé dans l'ébauche d'embase, à l'aide d'un dispositif de palpage (non représenté), on détermine la position de la face d'extrémité de la protubérance 18 du calibre par rapport à la face frontale 19 de l'ébauche d'embase et l'on élimine par usinage la surépaisseur au niveau de la face frontale du flasque de manière à amener celle-ci en coïncidence avec la face d'extrémité de la protubérance 18, comme schématisé par le trait mixte 20 sur la figure 4. Cet usinage se fait facilement avec une précision de 10 $\mu$m.

Du fait de la précision du positionnement, sur le calibre, de la portée conique 21 par rapport à l'extrémité de la protubérance 18, on est ainsi assuré du bon positionnement de la ligne circulaire de contact C de la portée conique avec la portée sphérique de la saillie 9 par rapport au centre de l'orifice 10 du flasque au niveau de sa face extérieure d'extrémité schématisée par la ligne 20, la distance d entre la ligne C et la face extérieure du flasque étant la même que celle illustrée à la figure 4a.

Lorsque ensuite, on retire le calibre et l'on met en place un embout 14 comme illustré à la figure 1, celui-ci se trouve parfaitement positionné par sa portée conique contre la saillie 9 de l'embase réalisant le positionnement et le centrage voulus de l'extrémité de la fibre optique 15.

Le mode de réalisation de la figure 2 diffère de celui de la figure 1, par la forme de la saillie 22 qui, à partir de la face arrière 8 du flasque 3, présente, dans l'alésage 2 de l'embase 1, en succession une portée cylindrique 23 une portée torique 24 et une portée transversale plane 25.

Les portées 23, 24, 25 peuvent être réalisées sans grande précision. N Par exemple, des tolérances de ± 0,05 mm à ± 0,1 mm suffisent dans la pratique.

La portée torique 24 présente un rayon réduit par rapport à celui de la calotte de la saillie 9 de la figure 1 et c'est dans cette portée sphérique que l'on réalise le contact selon une ligne circulaire avec la portée conique 16 de l'embout 14.

La réalisation de l'embase du mode de réalisation de la figure 2 s'effectue naturellement de la même manière que celle décrite en référence à la figure 4 pour l'embase du mode de réalisation de la figure 1.

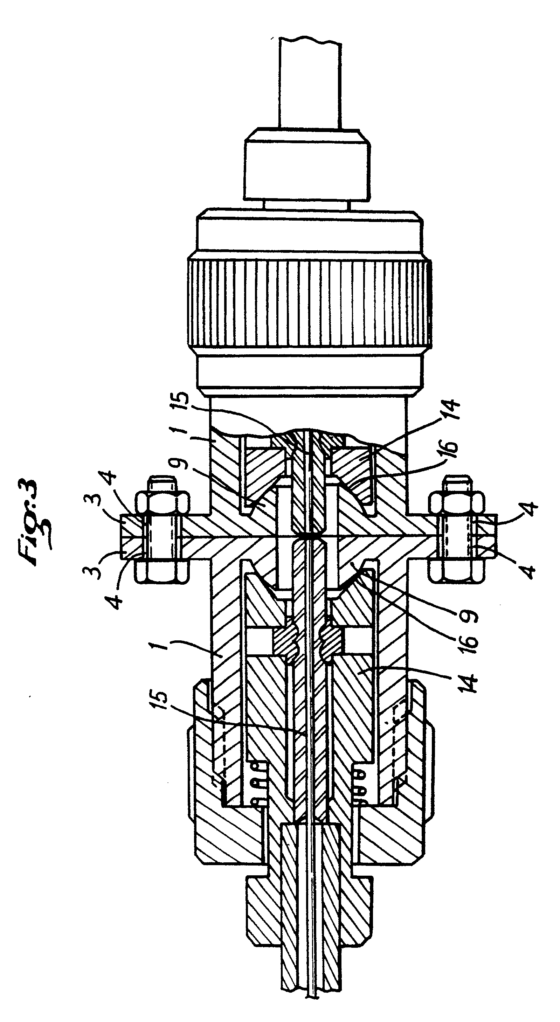

A la figure 3, on a illustré la connexion de deux fibres optiques utilisant deux embases 1 identiques à celles de la figure 1, en appui par leur face frontale, chacune des embases ayant reçu un embout 14 comme illustré dans le mode de réalisation de la figure 1.

Les deux embases sont reliées par des organes de fixation, de type vis et écrou, traversant des orifices 4 prévus à cet effet dans les flasques 3 des embases.

Pour réaliser l'alignement des deux embases, on procède comme indiqué à la figure 5.

On met en place dans l'une des embases préparées comme indiqué en référence à la figure 4, un calibre 26 reproduisant la forme d'un calibre 17 et donc d'un embout, pourvu d'une longue protubérance formant pion de centrage 27 en s'engageant dans un orifice de réception 28 d'un second calibre 29 engagé dans la seconde embase, également préparée comme indiqué à la figure 4. Une fois l'alignement des deux embases réalisé, on fixe celles-ci par des moyens de fixation de type vis et écrou 30, engagés dans les orifices 4 des flasques 3, des embases en appui l'une sur l'autre.

Une fois les embases ainsi alignées, on retire les calibres 26 et 29 et l'on met en place les deux embouts 14 contenant chacun une fibre optique 15 de manière à obtenir la structure illustrée à la figure 3.

## Revendications

1. Procédé pour réaliser une embase monobloc de connexion pour fibre optique, apte à recevoir une fibre optique positionnée et centrée dans un embout présentant une protubérance tubulaire axiale pourvue d'un conduit dans lequel la fibre optique peut être introduite avec jeu et immobilisée de manière que son extrémité coïncide avec l'extrémité de la protubérance et, entourant la partie arrière de celle-ci, un évidement annulaire présentant une paroi de forme conique, ladite embase comprenant un corps tubulaire (1) présentant à une extrémité un flasque frontal (3) pourvu sur sa face arrière (8), à l'intérieur de l'alésage (2) du corps tubulaire (1), d'une saillie (9, 22) présentant au moins une portée convexe (9, 24), ledit flasque pourvu de ladite saillie présentant un orifice axial traversant (10), apte à recevoir la protubérance axiale d'un embout (14) mis en place à l'arrière de l'alésage du corps d'embase et amené en appui par sa portée conique (16) sur la portée convexe (9, 24) de ladite saillie, caractérisé par le fait que l'on réalise une ébauche d'embase avec une surépaisseur de son flasque frontal (3), l'on met en place à l'intérieur de ladite embase un calibre de précision (17) reproduisant la forme d'un embout, l'on détecte, notamment par palpage, la position de la protubérance axiale (18) du calibre dans l'orifice axial (10) du flasque (3) de l'embase et l'on usine la face frontale dudit flasque de la manière à l'amener à coïncider avec la face frontale de la protubérance du calibre, de sorte que la portée conique (21) du calibre est en contact avec la saillie (9,22) de l'embase selon une ligne circulaire (C) située à une distance prédéterminée (d) de la face avant (20) du flasque (3) de l'embase.

2. Procédé selon la revendication 1, caractérisé par le fait que l'ébauche d'embase est réalisée par usinage.

3. Procédé selon la revendication 1, caractérisé par le fait que l'ébauche d'embase est réalisée par moulage.

4. Procédé selon l'une quelconque des revendications précédentes, caractérisé par le fait que la saillie intérieure de l'embase est constituée sous la forme d'une calotte sphérique (9).

**5.** Procédé selon l'une quelconque des revendications 1 à 3, caractérisé par le fait que la saillie (22) de l'embase comporte à partir de la face arrière (8) du flasque frontal (3) une portée cylindrique (23) raccordée à une portée torique (24) à faible rayon, se raccordant elle-même à une face transversale plane (25).

**6.** Procédé pour réaliser la connexion d'une fibre optique et d'un composant optoélectronique, notamment une diode électroluminescente contenue dans un boîtier, caractérisé par le fait que l'on réalise une embase par le procédé selon l'une quelconque des revendications 1 à 5 qu'après avoir retiré le calibre, on met en place dans l'embase, un embout (14) contenant une fibre optique (15) que l'on immobilise, notamment par l'intermédiaire d'une bague (12), vissée à la partie arrière (11) de l'embase, et exerçant un appui axial, notamment par l'intermédiaire d'un ressort (13) sur ledit embout, et l'on fixe l'embase contenant l'embout sur la face avant du boîtier (6) comportant le composant optoélectronique (7) au moyen d'organes de fixation (5) engagés dans des orifices (4) du flasque (3) de l'embase.

**7.** Procédé pour réaliser la connexion de fibres optiques contenues chacune dans un embout, caractérisé par le fait que l'on réalise par le procédé selon l'une quelconque des revendications 1 à 5 deux embases, on aligne celles-ci à l'aide de deux calibres (26, 29) reproduisant chacun sensiblement la forme d'un embout, l'un des calibres représentant une protubérance axiale (27) notablement allongée et l'autre calibre représentant un alésage (28) pour recevoir le prolongement de la protubérance axiale du premier calibre, l'on immobilise les deux embases dans la position alignée à l'aide de moyens de fixation (30) traversant les flasques frontaux (3) des deux embases (1) en appui l'un sur l'autre, l'on retire les calibres et l'on met en place les embouts contenant chacun une fibre optique que l'on immobilise de préférence chacun par l'intermédiaire d'une bague (12) vissée à la partie arrière de l'embase et exerçant un appui axial, notamment par l'intermédiaire d'un ressort, sur l'embout correspondant.

## Claims

**1.** A method of producing a onepiece connector collar for optical fibre, suitable for receiving an optical fibre positioned and centred in a ferrule exhibiting a tubular axial protuberance provided with a passage into which the optical fibre may be introduced with clearance and fixed so that the end of it coincides with the end of the protuberance, and surrounding the rear portion of the latter an annular hollow exhibiting a conically shaped wall, the said collar comprising a tubular body (1) exhibiting at one end a front flange (3) provided on its rear face (8) inside the bore (2) in the tubular body (1) with a projection (9, 22) exhibiting at least one convex bearing surface (9, 24), the said flange provided with the said projection exhibiting an axial orifice (10) which passes through and is suitable for receiving the axial protuberance from a ferrule (14) which is put in place at the rear of the bore in the body of the collar and brought to bear by its conical bearing surface (16) against the convex bearing surface (9, 24) of the said projection, characterized by the fact that a blank is produced for the collar with excess thickness of its front flange (3) and a precision gauge (17) which reproduces the shape of a ferrule is put in place inside the said collar, the position of the axial protuberance (18) from the gauge in the axial orifice (10) in the flange (3) on the collar is detected especially by palpation, and the front face of the said flange is machined so as to bring it to coincide with the front face of the protuberance from the gauge, so that the conical bearing surface (21) on the gauge is in contact with the projection (9, 22) from the collar along a circular line (C) situated at a predetermined distance (d) from the front face (23) of the flange (3) on the collar.

**2.** A method as in Claim 1, characterized by the fact that the blank for the collar is produced by machining.

**3.** A method as in Claim 1, characterized by the fact that the blank for the collar is produced by moulding.

**4.** A method as in any one of the preceding Claims, characterized by the fact that the projection inside the collar is formed in the shape of a spherical dome (9).

**5.** A method as in any one of the Claims 1 to 3, characterized by the fact that the projection (22) from the collar, starting from the rear face (8) of the front flange (3), includes a cylindrical bearing surface (23) which runs into a toroidal bearing surface (24) of small radius, which in turn runs into a plane transverse face (25).

**6.** A method of effecting the connection between an optical fibre and an optoelectronic component, in particular an electroluminescent diode contained in a casing, characterized by the fact that a collar is produced by the method as in any one of the Claims 1 to 5, that after the gauge has been withdrawn a ferrule (14) containing an optical fibre (15) is put in place in the collar and fixed, especially by way of a ring (12) which is screwed onto the rear portion (11) of the collar and exerts axial pressure against the said ferrule, especially by way of a spring (13), and the collar containing the ferrule is fixed onto the front face of the casing (6) which includes the optoelectronic component (7), by means of fixing members (5) engaged in apertures (4) in the flange (3) on the collar.

7. A method of effecting the connection between optical fibres each contained in a ferrule, characterized by the fact that two collars are produced by the method as in any one of the Claims 1 to 5, that these are aligned with the aid of two gauges (26, 29) each of which reproduces substantially the shape of a ferrule, one of the gauges representing a significantly elongated axial protuberance (27) and the other gauge representing a bore (28) for receiving the prolongation of the axial protuberance from the first gauge, the two collars are fixed in the aligned position by means of fixing members (30) which pass through the front flanges (3) of the two collars (1) bearing against one another, the gauges are withdrawn and the ferrules each containing an optical fibre are put in place and respectively fixed preferably by way of a ring (12) which is screwed onto the rear portion of the collar and exerts axial pressure, especially by way of a spring, against the corresponding ferrule,

## Ansprüche

1. Verfahren zum Herstellen eines Verbindungsansatzstückes aus einem Block für optische Fasern, geeignet, eine optische Faser aufzunehmen, die in einem Endstück positioniert und zentriert ist, das einen axialen rohrförmigen Vorsprung aufweist, der mit einer Leitung versehen ist, in der die optische Faser mit einem Spiel eingeführt und derart festgelegt werden kann, daß ihr Ende mit dem Ende des Vorsprungs übereinstimmt und eine den Rückbereich von diesem umgebende ringförmige Ausnehmung aufwesit, die eine Seitenwand von konischer Form aufweist, wobei das Ansatzstück einen rohrförmigen Körper (1) aufweist, der an einem Ende einen Frontalflansch (3) aufweist, der an seiner Hinterseite (8) im Inneren der Ausnehmung (2) des rohrförmigen Körpers (1) mit einem Vorsprung (9,22) versehen ist, der wenigstens eine konvexe Tragfläche (9,24) aufweist, wobei der mit dem genannten Vorsprung versehene Flansch eine axiale Durchgangsöffnung (10) aufweist, die geeignet ist, den axialen Vorsprung eines Endstücks (14) aufzunehmen, das hinter der Öffnung des Ansatzstückkörpers angeordnet ist und in Anlage durch seine konische Tragfläche (16) auf der konvexen Tragfläche (9,24) des Vorsprungs gebracht wird, **dadurch gekennzeichnet,** daß ein Rohling eines Ansatzstückes mit einer Überdicke seines Frontalflansches (3) hergestellt wird, eine Präzisionslehre (17) in das Innere des Ansatzstückes eingesetzt wird, wobei es die Form eines Endstücks reproduziert, daß insbesondere durch Abtasten die Position des axialen Vorsprungs (18) der Lehre in der axialen Öffnung (10) des Flansches (3) des Ansatzstückes erfaßt wird, und die Vorderseite des Flansches derart bearbeitet wird, daß sie in Übereinstimmung gebracht wird mit der Vorderseite des Vorsprungs der Lehre, derart, daß die konische Tragfläche (21) der Lehre in Berührung ist mit dem Vorsprung (9,22) des Ansatzstückes gemäß einer kreisförmigen Linie (C), die in einem vorbestimmten Abstand (d) von der Vorderseite (20) des Flansches (3) des Ansatzstückes angeordnet ist.

2. Verfahren nach Anspruch 1, **dadurch gekennzeichnet,** daß der Rohling des Ansatzstückes durch spanende Formgebung erzeugt wird.

3. Verfahren nach Anspruch 1, **dadurch gekennzeichnet,** daß der Rohling des Ansatzstückes durch Formen erzeugt wird.

4. Verfahren nach einem der vorhergehenden Ansprüche, **dadurch gekennzeichnet,** daß der innere Vorsprung des Ansatzstückes gebildet ist in der Form einer kugelförmigen Kappe (9).

5. Verfahren nach einem der Ansprüche 1 bis 3, **dadurch gekennzeichnet,** daß der Vorsprung (22) des Ansatzstückes, ausgehend von der hinteren Seite (8) des Frontalflansches (3), eine zylindrische Tragfläche (23) aufweist, die mit einer torischen Tragfläche (24) von schwachem Radius verbunden ist, welche ihrerseits mit einer ebenen Querfläche (25) verbunden ist.

6. Verfahren zur Herstellung der Verbindung einer optischen Faser und eines optoelektronischen Bauelements, insbesondere einer Leuchtdiode, die in einem Gehäuse enthalten ist, **dadurch**

gekennzeichnet, daß ein Ansatzstück durch das Verfahren nach einem der Ansprüche 1 bis 5 hergestellt wird, daß nach Zurückziehen der Lehre ein Endstück (14), das eine optische Faser (15) enthält, die festgelegt wird, in dem Ansatzstück angeordnet wird, insbesondere mittels eines Rings (12), der an dem hinteren Bereich (11) des Ansatzstückes aufgeschraubt ist und ein axialer Andruck, insbesondere mittels einer Feder (13) auf das Endstück, und das Ansatzstück, das das Endstück auf der Vorderseite des Gehäuses (6) enthält, das das optoelektronische Bauelement (7) enthält, mittels Befestigungsorganeinrichtungen (5) befestigt wird, die in Öffnungen (4) des Flansches (3) des Ansatzstückes eingreifen.

7. Verfahren zum Herstellen einer Verbindung von optischen Fasern, enthalten jeweils in einem Endstück, **dadurch gekennzeichnet,** daß durch das Verfahren nach einem der Ansprüche 1 bis 5 zwei Endstücke hergestellt werden, beide mittels zwei Lehren (26,29) ausgerichtet werden, die jeweils im wesentlichen die Form eines Endstücks wiedergeben, wobei eine der Lehren einen axialen Vorsprung (27), der beträchtlich verlängert ist und die andere Lehre eine Ausnehmung (28) darstellt, um die Verlängerung des axialen Vorsprungs der ersten Lehre aufzunehmen, die beiden Ansatzstücke in der ausgerichteten Stellung mittels Befestigungseinrichtungen (30) festgelegt werden, die die Frontalflansche (3) der beiden Ansatzstücke (1) in Anlage aneinander durchqueren, die Lehren zurückgezogen werden und die Endstücke festgelegt werden , die jeweils eine optische Faser enthalten, die vorzugsweise jeweils mittels eines Rings (12) festgelegt werden, der am hinteren Bereich des Ansatzstückes aufgeschraubt ist und einen axialen Druck, insbesondere mittels einer Feder auf das entsprechende Endstück ausübt.

Fig. 1

Fig. 2

Fig:3

EP 0 210 921 B1

Fig. 4

Fig. 4a

Fig. 5